# FASCICULE DE BREVET EUROPEEN

(11) **EP 3 062 671 B1**
(45) Date de publication et mention de la délivrance du brevet: **19.07.2017**
(21) Numéro de dépôt: 14731217.7
(22) Date de dépôt: 13.06.2014
(51) Int. Cl.: A47J 45/06

(54) **ARTICLE CULINAIRE COMPORTANT UNE ANSE RABATTABLE**
KOCHGESCHIRR MIT KLAPPGRIFF
ITEM OF COOKWARE HAVING A FOLDING HANDLE

(30) Priorité: 30.10.2013 CN 201310526697
(43) Date de publication de la demande: 07.09.2016
(73) Titulaire: SEB S.A., 69130 Ecully (FR)
(72) Inventeur: MAGNOULOUX, Guy, 74330 Epagny (FR)
(74) Mandataire: Bourrières, Patrice
(86) Numéro de dépôt international: PCT/EP2014/062394
(87) Numéro de publication internationale: WO 2015/062748

(56) Documents cités:
- EP-A1- 2 404 537
- WO-A1-99/05948
- US-A1- 2008 179 211

## Description

La présente invention concerne un article culinaire notamment une casserole ou un faitout comportant des anses rabattables.

On connaît du document EP2404537 un article culinaire comprenant une calotte munie d'une paroi de fond et d'une paroi latérale, au moins une anse rabattable agencée sur la paroi latérale et formée par une partie inférieure et une partie supérieure, chaque partie étant articulée sur la calotte pour pivoter entre une position de rangement dans laquelle chaque partie est rabattue vers la paroi latérale et une position de travail dans laquelle les deux parties forment un ensemble unitaire s'étendant radialement à la paroi latérale. La partie inférieure et la partie supérieure comportent respectivement un secteur denté formant un engrenage permettant de lier la partie inférieure et la partie supérieure dans leur mouvement de rotation respectif.

Ainsi, l'utilisateur peut manoeuvrer les deux parties de l'anse rabattable d'une seule main pour atteindre la position de travail ou la position de rangement. Un article culinaire comportant souvent deux organes de préhension disposés de manière diamétralement opposée sur la paroi verticale de la calotte, l'utilisateur peut donc facilement manoeuvrer en même temps d'une main chaque anse rabattable.

Cependant, la réalisation d'une telle anse rabattable munie de secteurs dentés est complexe. En effet, les dents de la partie supérieure forment plusieurs butées qui doivent s'insérer successivement de manière ajustée entre les dents de la partie inférieure pendant la course de la partie inférieure.

De plus, lors de l'utilisation de l'article culinaire sur une source de chauffage, l'anse rabattable peut être soumis à des températures élevées et subir des déformations importantes. Ainsi, ces déformations peuvent perturber le fonctionnement de l'engrenage et provoquer des coincements au niveau des dents de l'engrenage lors des manipulations.

Le but de la présente invention est de remédier aux inconvénients précités et de proposer un article culinaire comportant des anses rabattables présentant un fonctionnement fiable dans le temps.

Un autre but de l'invention est de proposer un article culinaire comportant des anses rabattables qui soient de conception simple et économique à mettre en oeuvre.

Ces buts sont atteints avec un article culinaire comprenant une calotte munie d'une paroi de fond et d'une paroi latérale, au moins une anse rabattable agencée sur la paroi latérale et formée par une partie inférieure et une partie supérieure, les parties inférieure et supérieure étant articulées sur la calotte pour pivoter entre une position de rangement dans laquelle les parties inférieure et supérieure sont rabattues vers la paroi latérale et une position de travail dans laquelle les parties inférieure (1b) et supérieure (1a) forment un ensemble unitaire s'étendant radialement à la paroi latérale, caractérisé en ce que la partie inférieure et la partie supérieure comportent respectivement une came et une première butée, la came coopérant avec la première butée lorsque la partie inférieure est déplacée de la position travail à la position de rangement pour déplacer la partie supérieure de la position de travail vers la position de rangement.

Un tel dispositif comportant une came coopérant avec une seule butée pour lier le mouvement de rotation de la partie supérieure au mouvement de rotation de la partie inférieure peut fonctionner même avec un jeu important au niveau des axes de rotation des parties inférieure et supérieure. La butée est juste en contact avec la came pendant la course angulaire de la partie inférieure sans autre contrainte particulaire de positionnement.

Avantageusement, la came comporte une zone active qui coopère avec la première butée pour amener la partie supérieure dans une position intermédiaire entre la position de travail et la position de rangement lorsque la partie inférieure pivote entre la position de travail et la position de rangement.

Cette disposition permet de rendre la partie supérieure facilement accessible lorsque la partie inférieure a été déplacée de la position de travail à la position de rangement. De plus, cette disposition permet de limiter la taille de la came et ainsi de garder une anse rabattable d'encombrement réduit.

De préférence, la partie supérieure parcourt entre la position de travail et la position intermédiaire une première course angulaire α1 et la partie supérieure parcourt entre la position intermédiaire et la position de rangement une deuxième course angulaire α2, la première course angulaire α1 étant supérieure à la deuxième course angulaire α2.

Ainsi, la partie supérieure parcourt plus de la moitié de sa course et la partie supérieure est amenée vers le haut de la calotte. Cette disposition permet de rendre la partie supérieure encore plus facilement accessible lorsque la partie inférieure a été déplacée de la position de travail à la position de rangement.

Avantageusement, la partie supérieure comporte une deuxième butée qui coopère avec une zone de butée de la came pour maintenir la partie inférieure dans la position de rangement lorsque la partie supérieure est pivotée de la positon intermédiaire à la position de rangement.

Cette disposition permet à l'utilisateur de ranger l'article culinaire en ne tenant que la partie supérieure en position de rangement. Un article culinaire comportant souvent deux organes de préhension disposés de manière diamétralement opposée sur la paroi verticale de la calotte, l'utilisateur peut donc facilement en tenant dans chaque main chaque partie supérieure en position de rangement insérer l'article culinaire dans un autre article culinaire de plus petite taille.

De préférence, l'anse rabattable comporte un moyen de rappel de la première butée à l'encontre de la came lorsque la partie inférieure passe de la position de travail à la position de rangement.

Ainsi, le mouvement de rotation de la partie supérieure est lié au mouvement de rotation de la partie inférieure de manière automatique.

Avantageusement, l'anse rabattable comporte un moyen de rappel de la partie inférieure en position de travail.

Cette disposition permet à la partie inférieure de passer de la position de rangement à la position de travail de manière automatique et de favoriser le maintien de la partie inférieure et de la partie supérieure dans la position de travail.

De préférence, le moyen de rappel de la première butée à l'encontre de la came et le moyen de rappel de la partie inférieure en position de travail comprennent respectivement au moins un ressort

Cette disposition permet de réaliser de manière particulièrement économique les moyens de rappel.

Avantageusement, la partie inférieure et la partie supérieure sont articulées autour d'un axe de rotation parallèle à la paroi de fond.

Cette disposition permet d'obtenir une anse rabattable dont l'encombrement est réduit dans une direction qui s'étend radialement à la paroi latérale en position de rangement. En effet, l'anse rabattable est divisée en deux parties, la partie inférieure étant disposée vers le bas le long de la paroi latérale et la partie supérieure étant disposée verticalement vers le haut.

De préférence, la partie inférieure et la partie supérieure sont verrouillées l'une sur l'autre en position de travail pour former un ensemble unitaire.

Cette disposition permet à l'utilisateur de manipuler l'article culinaire en toute sécurité. En effet, les deux parties verrouillées en position travail forment l'équivalent d'une anse rabattable monobloc. Le verrouillage des deux parties peut se renforcer lors de la manipulation sous l'effet du poids de l'article culinaire.

Cette disposition permet également de favoriser la position de travail qui est celle normalement utilisée pour la préparation des aliments et ainsi d'éviter de bruler l'extrémité de la partie inférieure qui serait restée en position de rangement, dirigée vers le bas, trop près de la source de chauffe.

Avantageusement, l'article culinaire est une casserole ou un faitout.

L'invention sera mieux comprise à l'étude du mode de réalisation pris à titre nullement limitatif et illustré dans les figures annexées dans lesquelles :
- La figure 1 illustre une vue en perspective d'une anse rabattable selon un mode particulier de réalisation de l'invention.
- La figure 2 illustre une vue en perspective selon une direction II de l'anse rabattable de la figure 1.
- La figure 3 illustre une vue en perspective éclatée de l'anse rabattable de la figure 2.
- La figure 4 illustre une vue en coupe d'un article culinaire comportant l'anse rabattable de la figure 1, l'article culinaire étant inséré dans un autre article culinaire.
- La figure 5 illustre une vue de coté de l'anse rabattable de l'article culinaire de la figure 4, les première et deuxième parties étant en position de travail.
- La figure 6 illustre une vue de coté de l'anse rabattable de l'article culinaire de la figure 5, les première et deuxième parties étant en position de rangement.
- La figure 7 illustre une vue de coté de l'anse rabattable de l'article culinaire de la figure 5, la partie inférieure étant en position de rangement et la partie supérieure étant en position intermédiaire.
- La figure 8 illustre une vue en perspective éclatée de l'anse rabattable de l'article culinaire de la figure 5, les première et deuxième parties étant en position de rangement.

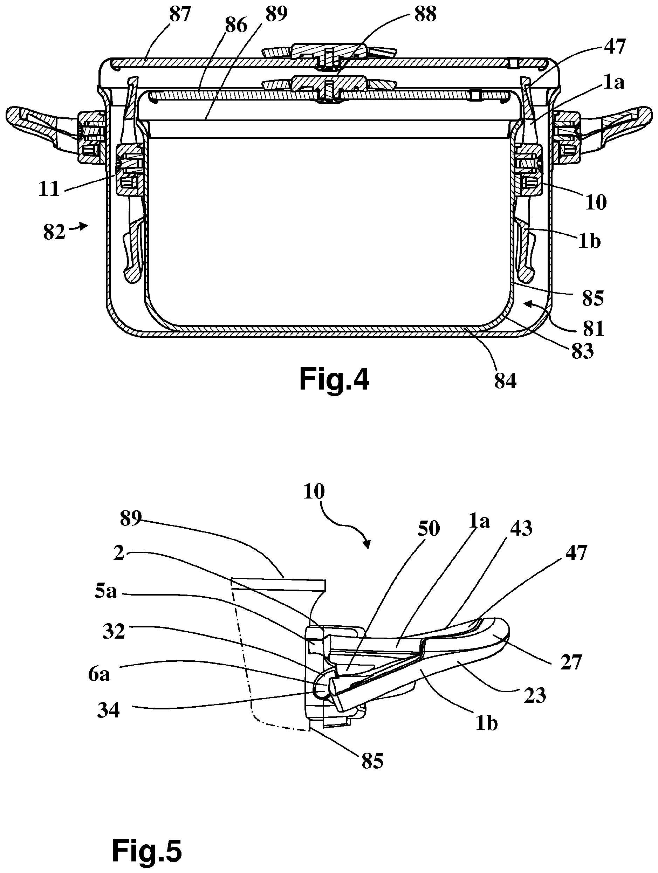

Tel que visible à la figure 4, un article culinaire 81 comporte une calotte 83 de forme sensiblement cylindrique comprenant une paroi de fond 84, une paroi latérale 85 sensiblement verticale et une extrémité supérieure délimitant une ouverture 89 par laquelle peuvent être introduits les aliments. Deux anses rabattables 10, 11 sont agencés sur la paroi latérale 85 de manière diamétralement opposée. L'article culinaire 81 peut comporter un couvercle 86 muni de deux anses rabattables du type décrit dans le document EP1871206 et destinées à reposer en bordure de l'extrémité supérieure de la paroi latérale pour fermer l'ouverture 89. L'article culinaire 81 est inséré dans un article culinaire 82 de même type et de taille légèrement plus grande qui peut comporter également un couvercle 87.

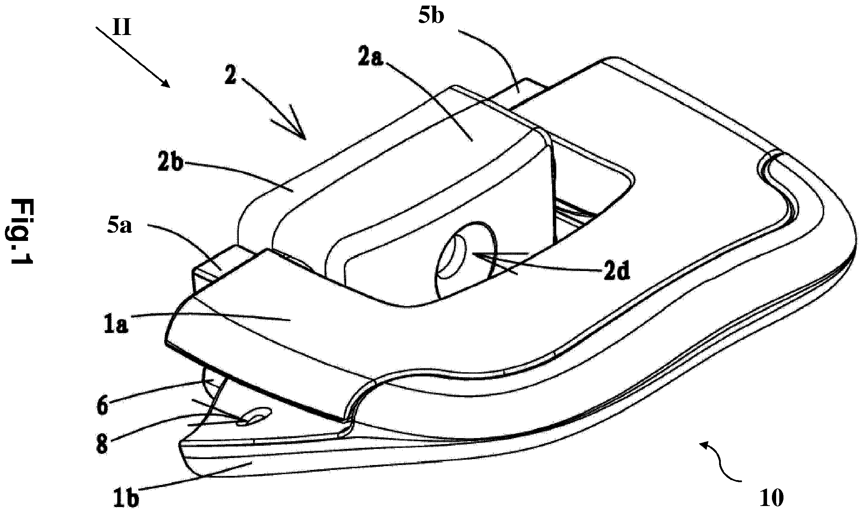

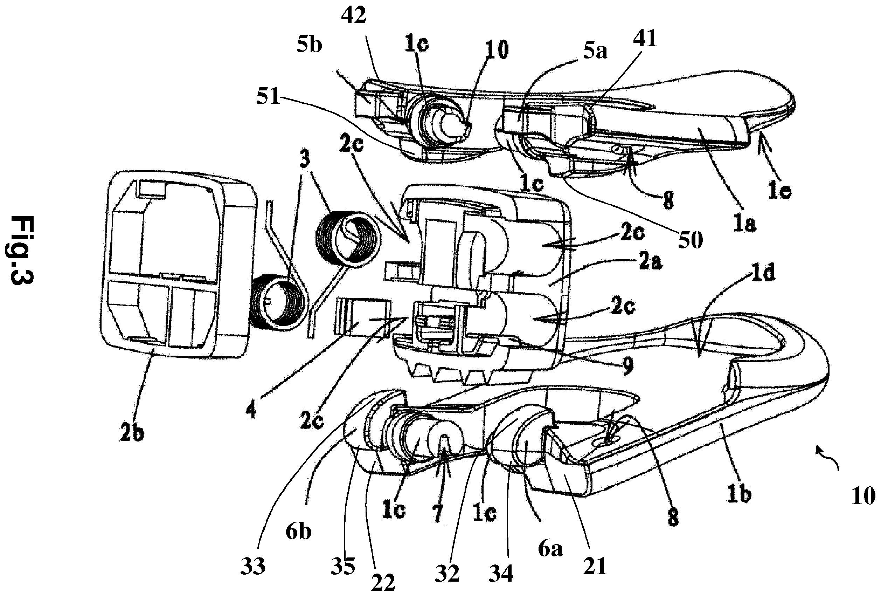

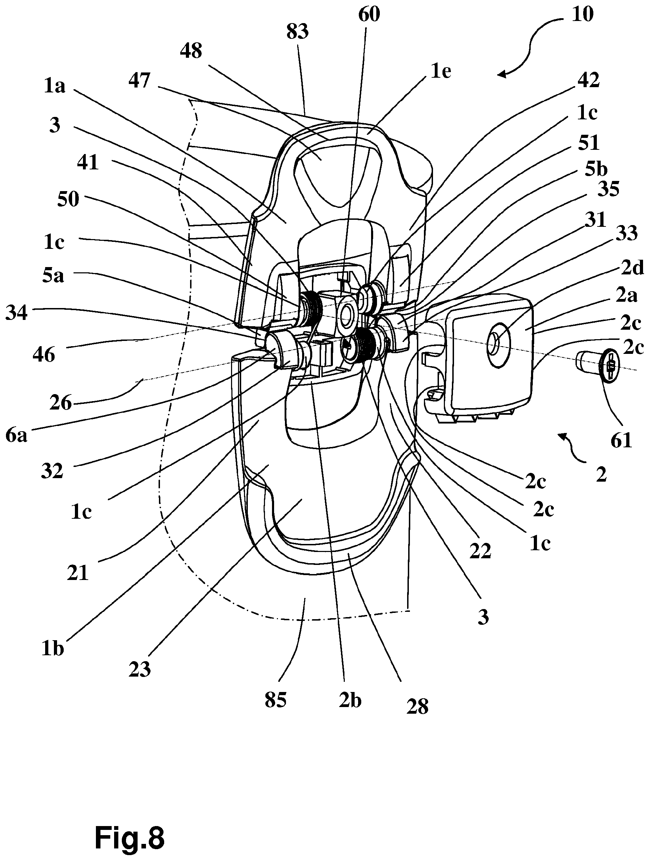

Tel que visible aux figures 1, 2, 3 et 8, l'anse rabattable 10 comporte une embase 2 fixée à la paroi latérale 85, une partie inférieure 1b et une partie supérieure 1a montées pivotantes dans l'embase 2. La partie inférieure 1 b et la partie supérieure 1a ont une forme générale en U (Fig. 1, 3 et 8). Ainsi chaque partie 1b, 1a comprend deux branches 21, 22, 41, 42 reliées par un secteur circulaire formant une extrémité libre 23, 1e. A l'extrémité de chaque branche du U est agencé un tourillon 1c (Fig.3) qui s'étend vers l'intérieur du U. Les tourillons 1c disposés à l'extrémité de chaque branche du U définissent un axe de rotation 26, 46 (Fig.8) pour respectivement la partie inférieure 1 b et la partie supérieure 1a. Les deux axes de rotation 26, 46 sont superposés et parallèles à la paroi de fond 84.

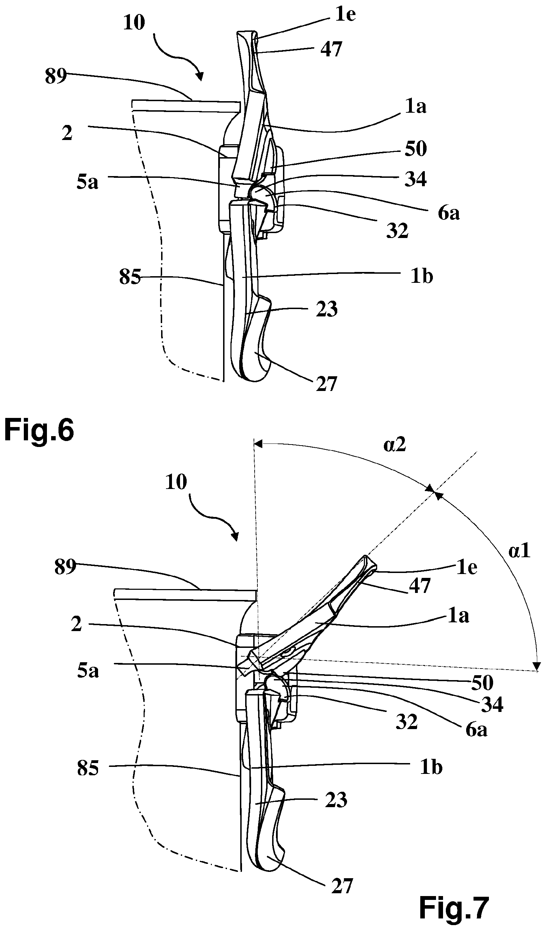

La partie inférieure 1b et la partie supérieure 1a sont articulées dans l'embase 2 pour pivoter entre une position de rangement dans laquelle la partie inférieure 1b et la partie supérieure 1a sont disposées verticalement, en étant sensiblement alignées avec la paroi latérale 85 (Fig. 6 et 8), et une position de travail dans laquelle la partie inférieure 1b et la partie supérieure 1a forment un ensemble unitaire s'étendant radialement à la paroi latérale, de manière sensiblement horizontale (Fig. 1, 2, 3 et 5). Ainsi, l'anse rabattable 10 est divisée en deux parties 1b, 1a et présente en position de rangement un encombrement réduit dans une direction qui s'étend radialement à la paroi latérale 85. A titre d'exemple, des articles culinaires empilables ont des diamètres de 18, 22 et 26 centimètres soit une différence de diamètre d'environ quatre centimètres. Ainsi, dans la position de rangement l'embase 2, la partie inférieure 1b et la partie supérieure 1a s'étendent radialement à la paroi verticale 85 au maximum de deux centimètres.

Dans la position de rangement (Fig. 6 et 8), la partie supérieure 1a alignée à la paroi verticale 85 vers le haut comporte une zone de préhension 47 dépassant au-dessus de la calotte 83. La zone de préhension 47 est dimensionnée pour être saisie facilement par la main de l'utilisateur lorsque ce dernier veut extraire l'article culinaire 81 empilé dans un autre article culinaire 82 de taille légèrement supérieure. La zone de préhension 47 est également dimensionnée pour permettre à l'utilisateur de maintenir l'article culinaire 81 jusqu'à sa position de rangement finale dans l'autre article culinaire 82 lorsqu'il veut empiler ces deux articles culinaires. La zone de préhension 47 comporte une extrémité munie d'un rebord 48 permettant aux doigts de ne pas glisser lors des manipulations en position de rangement.

Tel que visible à la figure 4, le couvercle 86 comporte un point haut 88 qui définit un plan parallèle au plan de travail. La zone de préhension 47 s'étend jusqu'à ce plan. L'article culinaire 82, de taille légèrement supérieure, est dimensionné pour que la face interne du couvercle 87 soit positionnée juste au-dessus du plan contenant le point haut 88.

Tel que visible aux figures 1 à 3 et 5, dans la position de travail, la partie supérieure 1a s'étend radialement à la paroi de manière sensiblement horizontale et la partie inférieure 1a s'étend radialement à la paroi de manière sensiblement inclinée vers le haut. L'extrémité libre 23 de la partie inférieure 1a comprend un logement 1d de réception pour l'extrémité libre 1e de la partie supérieure 1a. Ainsi dans la position de travail, l'extrémité libre 1e de la partie supérieure 1a est encastrée dans le logement 1d de l'extrémité libre 23 de la partie inférieure 1b pour former un ensemble unitaire saisi par l'utilisateur lorsqu'il se sert de l'article culinaire.

Lorsque l'utilisateur soulève l'article culinaire 81, l'extrémité libre 1e de la partie supérieure 1a vient en appui et exerce une force contre un bord du logement 1d de la partie inférieure 1b pour verrouiller ensemble les deux parties 1b, 1a. Ainsi, dans cette position de travail, la partie supérieure 1a empêche la rotation vers le haut de la partie inférieure 1b. Plus le poids de l'article culinaire 81 et des aliments qu'il contient est important, plus la force d'appui est importante et en conséquence, plus le verrouillage est important.

Tel que visible aux figures 3 et 8, l'embase 2 comporte une platine 2b et un capot 2a comprenant quatre logements 2c. Chaque logement 2c reçoit l'un des tourillons 1c. La paroi latérale 85 de l'article culinaire 1 comporte un goujon 60 fixé par soudage et comprenant un trou taraudé. Le capot 2a comporte une ouverture 2d traversante permettant le passage d'une vis 61 de fixation. L'embase 2 est fixée sur la paroi latérale 85 par le vissage de la vis 61 dans le trou taraudé.

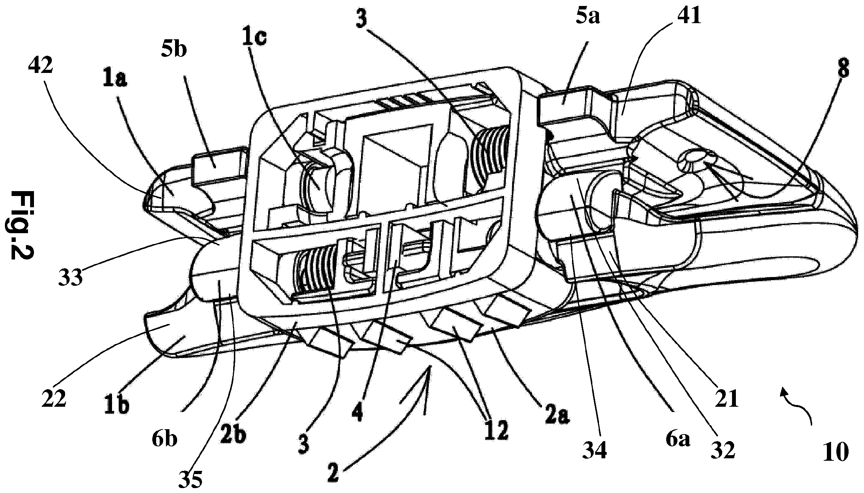

Conformément aux figures 2, 3 et 8, les extrémités de chaque branche 21, 22, de la partie inférieure 1b comportent respectivement une came 6a, 6b et les extrémités de chaque branche 41, 42 de la partie supérieure 1a comportent respectivement une première butée 50, 51 et une deuxième butée 5a, 5b. Lorsque que la partie inférieure 1b est déplacée de la position de travail à la position de rangement, les cames 6a, 6b coopèrent avec les premières butées 50, 51 pour déplacer la partie supérieure 1a de la position de travail vers la position de rangement dans une position intermédiaire. Par exemple, tel qu'illustré par la figure 7, la partie inférieure 1b parcourt entre la position de travail et la position de rangement une course angulaire d'environ 100°. Ce déplacement de la partie inférieure 1b et donc des cames 6a, 6b qui coopèrent avec les premières butées 50, 51, engendre le déplacement de la partie supérieure 1a qui parcourt entre la position de travail et la position intermédiaire une première course angulaire α1 d'environ 50°.

Les cames 6a, 6b sont formées d'une portion cylindrique s'étendant radialement par rapport à l'axe de rotation 26 et présentent une épaisseur sensiblement constante. Les butées 50, 51 forment depuis les extrémités de chaque branche 41, 42 une excroissance de forme sensiblement triangulaire et d'épaisseur équivalente à l'épaisseur des cames 6a, 6b. Les cames 6a, 6b coopèrent avec les butées 50, 51 selon une zone de contact sensiblement linéaire, parallèle à l'axe de rotation 26. Le déplacement de la partie inférieure 1b de la position de travail à la position de rangement provoque le déplacement de la ligne de contact sur la came 6a, 6b entre deux positions qui définissent une zone active 32, 33 de la came 6a, 6b. La zone active 32, 33 est communément appelée le profil de la came.

La zone active 32, 33 de la came 6a, 6b est configurée pour qu'une progression de la position de la partie inférieure 1b dans la course angulaire de la position de travail vers la position de rangement génère une progression de la position de la partie supérieure 1a dans la première course angulaire α1 entre la position de travail et la position intermédiaire. En d'autres termes, la distance entre l'axe de rotation 26 et la ligne de contact entre la came 6a, 6b et la première butée 50, 51 correspond à un rayon r. La fonction donnant le rayon r par rapport à la valeur en degré de la position angulaire de la partie inférieure 1b dans la course angulaire entre la position de travail et la position de rangement est croissante.

Conformément aux figures 2, 3, 5 à 8, la partie supérieure 1a comporte sur les extrémités de chaque branche 41, 42 la deuxième butée 5a, 5b. Les deuxièmes butées 5a, 5b coopèrent avec des zones de butée 34, 35 des cames 6a, 6b pour maintenir la partie inférieure 1b dans la position de rangement lorsque la partie supérieure 1a est amenée dans la position de rangement (Fig.6).

La partie supérieure 1a comporte un ressort 3 de torsion agencé sur le tourillon 1c, pour permettre le rappel en position de travail de la partie supérieure 1a. Ainsi, les premières butées 50, 51 sont amenées au contact des cames 6a, 6b lors de la course angulaire de la partie supérieure 1a entre la position de travail et la position intermédiaire (Fig.7).

La partie inférieure 1b comporte également un ressort 3 de torsion agencé sur le tourillon 1c, pour permettre le rappel en position de travail de la partie inférieure 1b. Ainsi, les zones de butée 34, 35 sont amenées au contact des deuxièmes butées 5a, 5b lorsque l'on maintient la partie supérieure 1a en position de rangement (Fig.6).

Pour ranger l'article culinaire 81 posé sur un plan de travail dans un autre article culinaire 82 de taille légèrement supérieure, l'utilisateur appuie avec la paume de la main sur l'extrémité libre 23 de la partie inférieure 1b pour la faire pivoter de la position de travail à la position de rangement et entrainer la partie supérieure 1a en rotation de la position travail à la position intermédiaire à l'aide des cames 6a, 6b qui coopèrent avec les premières butées 50, 51. Ansi, la partie supérieure 1a parcourt entre la position de travail et la position intermédiaire une première course angulaire α1 (Fig.7). L'utilisateur saisit ensuite la zone de préhension 47 et amène la partie supérieure 1a en position de rangement, alignée avec la paroi latérale 85. Ainsi, la partie supérieure 1a parcourt entre la position intermédiaire et la position de rangement une deuxième course angulaire α2 (Fig.7). Dans cette position de rangement, les deuxièmes butées 5a, 5b coopèrent avec les zones de butées 34, 35 pour maintenir la partie supérieure 1a en position de rangement. L'utilisateur peut alors relâcher l'appui de la paume de la main sur l'extrémité libre 23 de la partie inférieure 1b et tenir l'article culinaire par la zone de préhension 47 qui est située au-dessus de la calotte 83. Ainsi l'utilisateur peut insérer l'article culinaire 81 complètement sans le lâcher dans l'autre article culinaire 82 de taille légèrement supérieure.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Article culinaire (81) comprenant une calotte (83) munie d'une paroi de fond (84) et d'une paroi latérale (85), au moins une anse rabattable (10, 11) agencée sur la paroi latérale (85) et formée par une partie inférieure (1b) et une partie supérieure (1a), les parties inférieure (1b) et supérieure (1a) étant articulées sur la calotte (83) pour pivoter entre une position de rangement dans laquelle les parties inférieure (1b) et supérieure (1a) sont rabattues vers la paroi latérale (85) et une position de travail dans laquelle les parties inférieure (1b) et supérieure (1a) forment un ensemble unitaire s'étendant radialement à la paroi latérale (85), **caractérisé en ce que** la partie inférieure (1b) et la partie supérieure (1a) comportent respectivement une came (6a, 6b) et une première butée (50, 51), la came (6a, 6b) coopérant avec la première butée (50, 51) lorsque la partie inférieure (1b) est déplacée de la position travail à la position de rangement pour déplacer la partie supérieure (1a) de la position de travail vers la position de rangement.

2. Article culinaire (81) selon la revendication 1, **caractérisé en ce que** la came (6a, 6b) comporte une zone active (32, 33) qui coopère avec la première butée (50, 51) pour amener la partie supérieure (1a) dans une position intermédiaire entre la position de travail et la position de rangement lorsque la partie inférieure (1 b) pivote entre la position de travail et la position de rangement.

3. Article culinaire (81) selon la revendication 2, **caractérisé en ce que** la partie supérieure (1a) parcourt entre la position de travail et la position intermédiaire une première course angulaire α1 et **en ce que** la partie supérieure (1a) parcourt entre la position intermédiaire et la position de rangement une deuxième course angulaire α2, la première course angulaire α1 étant supérieure à la deuxième course angulaire α2.

4. Article culinaire (81) selon l'une quelconque des revendications précédentes, **caractérisé en ce que** la partie supérieure (1a) comporte une deuxième butée (5a, 5b) qui coopère avec une zone de butée (34, 35) de la came (30, 31) pour maintenir la partie inférieure (1b) dans la position de rangement lorsque la partie supérieure (1a) est pivotée de la positon intermédiaire à la position de rangement.

5. Article culinaire (81) selon l'une quelconque des revendications précédentes, **caractérisé en ce que** l'anse rabattable (10) comporte un moyen de rappel de la première butée (50, 51) à l'encontre de la came (6a, 6b) lorsque la partie inférieure (1b) passe de la position de travail à la position de rangement.

6. Article culinaire (81) selon l'une quelconque des revendications précédentes, **caractérisé en ce que** l'anse rabattable (10) comporte un moyen de rappel de la partie inférieure (1b) en position de travail.

7. Article culinaire (81) selon les revendications 5 et 6, **caractérisé en ce que** le moyen de rappel de la première butée (50, 51) à l'encontre de la came (6a, 6b) et le moyen de rappel de la partie inférieure (1b) en position de travail comprennent respectivement au moins un ressort (3).

8. Article culinaire (81) selon l'une quelconque des revendications précédentes, **caractérisé en ce que** la partie inférieure (1b) et la partie supérieure (1a) sont articulées autour d'un axe de rotation (26, 46) parallèle à la paroi de fond (84).

9. Article culinaire (81) selon l'une quelconque des revendications précédentes, **caractérisé en ce que** la partie inférieure (1b) et la partie supérieure (1a) sont verrouillées l'une sur l'autre en position de travail pour former un ensemble unitaire.

10. Article culinaire (81) selon l'une des revendications 1 à 9, **caractérisé en ce qu'**il est une casserole ou un faitout

## Patentansprüche

1. Kochartikel (81), der eine Kappe (83), die mit einer Bodenwand (84) und einer Seitenwand (85) versehen ist, zumindest einen klappbaren Griff (10, 11) umfasst, der an der Seitenwand (85) angeordnet ist und durch einen unteren Teil (1b) und ein oberen Teil (1a) gebildet ist, wobei der untere (1b) und der obere Teil (1a) an der Kappe (83) angelenkt sind, der zwischen einer Aufbewahrungsposition, in der der untere (1b) und der obere (1a) Teil in Richtung der Seitenwand (85) umgeklappt sind, und einer Arbeitsposition geschwenkt zu werden, in der der untere (1b) und obere (1a) Teil eine einheitliche Anordnung bilden, die sich radial an der Seitenwand (85) erstreckt, **dadurch gekennzeichnet, dass** der untere Teil (1b) und der obere Teil (1a) jeweils eine Nocke (6a, 6b) und einen ersten Anschlag (50, 51) umfassen, wobei die Nocke (6a, 6b) mit dem ersten Anschlag (50, 51) zusammenwirkt, wenn der untere Teil (1b) aus der Arbeitsposition zu der Aufbewahrungsposition bewegt wird, um den oberen Teil (1a) aus der Arbeitsposition zu der Aufbewahrungsposition zu bewegen.

2. Kochartikel (81) nach Anspruch 1, **dadurch gekennzeichnet, dass** die Nocke (6a, 6b) eine aktive Zone (32, 33) umfasst, die mit dem ersten Anschlag (50, 51) zusammenwirkt, um den oberen Teil (1a) in eine Zwischenposition zwischen der Arbeitsposition und der Aufbewahrungsposition zu bringen, wenn der untere Teil (1b) zwischen der Arbeitsposition und der Aufbewahrungsposition geschwenkt wird.

3. Kochartikel (81) nach Anspruch 2, **dadurch gekennzeichnet, dass** der obere Teil (1a) zwischen der Arbeitsposition und der Zwischenposition einem ersten Winkelweg α1 durchläuft, und dass der obere Teil (1a) zwischen der Zwischenposition und der Aufbewahrungsposition einen zweiten Winkelhub α2 durchläuft, wobei der erste Winkelweg α1 größer als der zweite Winkelweg α2 ist.

4. Kochartikel (81) nach einem der vorhergehenden Ansprüche, **dadurch gekennzeichnet, dass** der obere Teil (1a) einen zweiten Anschlag (5a, 5b) umfasst, der mit einer Anschlagszone (34, 35) des Nockens (30, 31) zusammenwirkt, um den unteren Teil (1b) in der Aufbewahrungsposition beizubehalten, wenn der obere Teil (1a) von der Zwischenposition zu der Aufbewahrungsposition geschwenkt wird.

5. Kochartikel (81) nach einem der vorhergehenden Ansprüche, **dadurch gekennzeichnet, dass** der klappbare Griff (10) ein Mittel zum Rückstellen des ersten Anschlags (50, 51) beim Auftreffen auf die Nocke (6a, 6b) aufweist, wenn der untere Teil (1b) sich von der Arbeitsposition in die Aufbewahrungsposition bewegt.

6. Kochartikel (81) nach einem der vorhergehenden Ansprüche, **dadurch gekennzeichnet, dass** der klappbare Griff (10) ein Mittel zum Rückstellen des unteren Teils (1b) in die Arbeitsposition umfasst.

7. Kochartikel (81) nach den Ansprüchen 5 und 6, **dadurch gekennzeichnet, dass** die Mittel zum Rückstellen des ersten Anschlages (50, 51) beim Auftreffen auf die Nocke (6a, 6b) und die Mittel zum Rückstellen des unteren Teils (1b) in die Arbeitsposition jeweils zumindest eine Feder (3) umfassen.

8. Kochartikel (81) nach einem der vorhergehenden Ansprüche, **dadurch gekennzeichnet, dass** der untere Teil (1b) und der obere Teil (1a) um eine Drehachse (26, 46) parallel zu der Bodenwand (84) angelenkt sind.

9. Kochartikel (81) nach einem der vorhergehenden Ansprüche, **dadurch gekennzeichnet, dass** der untere Teil (1b) und der obere Teil (1a) ineinander in der Arbeitsposition verriegelt sind, um eine einheitliche Anordnung zu bilden.

10. Kochartikel (81) nach einem der Ansprüche 1 bis 9, **dadurch gekennzeichnet, dass** er eine Pfanne oder Kochtopf ist.

## Claims

1. Item of cookware (81) comprising a pan (83) provided with a bottom wall (84) and a side wall (85), at least one folding handle (10, 11) arranged on the side wall (85) and formed by a lower part (1b) and an upper part (1a), the lower part (1b) and upper part (1a) being articulated to the pan (83) so as to pivot between a stowed position in which the lower part (1b) and upper part (1a) are folded towards the side wall (85), and a working position in which the lower part (1b) and upper part (1a) form a one-piece unit extending radially with respect to the side wall (85), **characterised in that** the lower part (1b) and the upper part (1a) comprise a cam (6a, 6b) and a first stop (50, 51), respectively, the cam (6a, 6b) engaging with the first stop (50, 51) when the lower part (1b) is moved from the working position to the stowed position so as to move the upper part (1a) from the working position towards the stowed position.

2. Item of cookware (81) according to claim 1, **characterised in that** the cam (6a, 6b) comprises an active zone (32, 33) engaging with the first stop (50, 51) to bring the upper part (1a) into an intermediate position between the working position and the stowed position when the lower part (1b) pivots between the working position and the stowed position.

3. Item of cookware (81) according to claim 2, **characterised in that** the upper part (1a) travels through a first angular trajectory α1 between the working position and the intermediate position and **in that** the upper part (1a) travels through a second angular trajectory α2 between the intermediate position and the stowed position, the first angular trajectory α1 being higher than the second angular trajectory α2.

4. Item of cookware (81) according to any one of the preceding claims, **characterised in that** the upper part (1a) comprises a second stop (5a, 5b) which engages with a stop zone (34, 35) of the cam (30, 31) to maintain the lower part (1b) in the stowed position when the upper part (1a) is pivoted from the intermediate position to the stowed position.

5. Item of cookware (81) according to any one of the preceding claims, **characterised in that** the folding handle (10) comprises means for returning the first stop (50, 51) against the cam (6a, 6b) when the lower part (1b) passes from the working position to the stowed position.

6. Item of cookware (81) according to any one of the preceding claims, **characterised in that** the folding handle (10) comprises means for returning the lower part (1b) into a working position.

7. Item of cookware (81) according to claims 5 and 6, **characterised in that** the means for returning the first stop (50, 51) against the cam (6a, 6b) and the means for returning the lower part (1b) into a working position respectively comprise at least one spring (3).

8. Item of cookware (81) according to any one of the preceding claims, **characterised in that** the lower part (1b) and the upper part (1a) are articulated about an axis of rotation (26, 46) parallel to the bottom wall (84).

9. Item of cookware (81) according to any one of the preceding claims, **characterised in that** the lower part (1b) and the upper part (1a) are locked one on top of the other in the working position to form a one-piece unit.

10. Item of cookware (81) according to any one of claims 1 to 9, **characterised in that** said item is a large pot or casserole dish.
